Europäisches Patentamt

(19) European Patent Office

Office européen des brevets

(11) Veröffentlichungsnummer: **0 008 754**
**B1**

(12) **EUROPÄISCHE PATENTSCHRIFT**

(45) Veröffentlichungstag der Patentschrift:
**10.06.81**

(51) Int. Cl.³: **B 23 K 9/08**

(21) Anmeldenummer: **79103133.9**

(22) Anmeldetag: **24.08.79**

(54) **Stromprogramm für das Schweissen mit magnetisch bewegtem Lichtbogen.**

(30) Priorität: **12.09.78 DE 2839544**

(43) Veröffentlichungstag der Anmeldung:
**19.03.80 Patentblatt 80/6**

(45) Bekanntmachung des Hinweises auf die Patenterteilung:
**10.06.81 Patentblatt 81/23**

(84) Benannte Vertragsstaaten:
**BE FR GB IT NL SE**

(56) Entgegenhaltungen:
**DD-A-129 179**
**DE-A-2 507 448**
**US-A-3 484 578**

(73) Patentinhaber: **INDUSTRIE-WERKE KARLSRUHE
AUGSBURG Aktiengesellschaft, Blücherstrasse 144,
D-8900 Augsburg (DE)**

(72) Erfinder: **Pache, Norbert, Zusmarshauser Weg 7a,
D-8900 Augsburg (DE)**
Erfinder: **Ganowski, Franz-Josef, Dipl.-Ing., Haus Nr. 46,
D-8901 Maingründel (DE)**
Erfinder: **Mazac, Karel, Dipl.-Ing., Nebelhornstrasse 2,
D-8900 Augsburg (DE)**

(74) Vertreter: **Ernicke, Hans-Dieter, Dipl.-Ing.,
Schwibbogenplatz 2b, D-8900 Augsburg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Stromprogramm für das Schweißen mit magnetisch bewegtem Lichtbogen

Die vorliegende Erfindung bezieht sich auf ein Stromprogramm mit magnetisch bewegtem Lichtbogen. Das Schweißen mit magnetisch bewegtem Lichtbogen ist ein Verfahren, auf dessen Basis bereits erste vollautomatische Produktionsmaschinen arbeiten und ihre Bewährungsprobe bestanden haben. Es stellt eine sinnvolle Ergänzung des Abbrenn-, Stumpf-, Rollennaht-, Wig-, Mig-, Mag- und Reibstumpfschweißens dar und wird meist zum Schweißen von Rohren oder Werkstücken mit rohrförmigem Ansatz verwendet. Diese Teile müssen jedoch nicht drehsymmetrisch sein.

Das Ziel einer optimalen Investition, minimaler Aufwand bei größtem wirtschaftlichen Nutzen, kann nur erreicht werden, wenn das neue Verfahren eingebettet in die anderen oben erwähnten Techniken gesehen wird.

Seine Vorteile sind eindeutig. Sie sind sowohl wirtschaftlicher als auch schweißtechnischer Natur und stellen eine Synthese der bisher bekannten Vorteile des Widerstand-, Lichtbogen- und Reibschweißens dar.

Die zwei grundsätzlich möglichen Anordnungen beim Schweißen mit magnetisch bewegtem Lichtbogen sind:

a) Das Schweißen mit einem sich bewegenden Lichtbogen zwischen den zu verbindenden Werkstücken.

b) Das Schweißen mit einem sich zwischen einer nicht abschmelzenden Hilfselektrode und den Werkstücken bewegenden Lichtbogen.

Die physikalischen Grundlagen für das Wandern bzw. Rotieren des Lichtbogens um die Stirnfläche der Werkstücke finden sich in den elektrotechnischen Grundgesetzen. Hiernach wird jeder Stromfluß von einem Magnetfeld begleitet, wobei aus Gründen der Symmetrie diese magnetischen Feldlinien bei einem Rundleiter konzentrische Kreise bilden. Im Falle des Stromflusses in einem Lichtbogen kann dieser näherungsweise ebenfalls als Rundleiter betrachtet werden. Befindet er sich in einem zusätzlichen stationären Magnetfeld, so überlagern sich dessen Feldlinien mit denen des Lichtbogens. Da einerseits die magnetischen Feldlinien aus energetischen Gründen stets das Bestreben haben sich zu verkürzen und andererseits das zusätzliche Magnetfeld örtlich fest liegt, wirkt auf den Lichtbogen eine magnetische Kraft. Die Richtung dieser Kraft ist mittels der sogenannten Dreifingerregel der linken Hand auffindbar.

Der Hintergrund der vorliegenden Erfindung ist insbesondere da zu suchen, wo es um das Schweißen größerer Wanddicken geht, wobei die Form der Schweißkantennahtbahn selbst an sich beliebig ist. Beim Verschweißen größerer Wanddicken ist es bisher nicht möglich, das zu verschweißende Material innerhalb eines kurzen Zeitintervalls gleichmäßig an der ganzen Schweiß(stirn)fläche zu erwärmen. Andererseits erfordert jedoch die Wirtschaftlichkeit des Schweißens mit magnetisch bewegtem Lichtbogen, daß die Brennzeit des Lichtbogens, also die Schweißzeit möglichst kurz bleibt. Dies wiederum bedeutet, daß sich der gezündete Lichtbogen von Anfang an gleichmäßig und mit konstanter Umlaufgeschwindigkeit über die zu verschweißende Fläche (Stirnfläche) bewegen müßte, um hinsichtlich der Schweißqualität optimale und im Hinblick auf eine Vielzahl nacheinander geschweißter Werkstücke jederzeit reproduzierbare Ergebnisse zu gewährleisten.

Es ist bereits bekannt (DD-PS 129 179) am Ende einer mit begrenztem Schweißstrom arbeitenden Vorwärmphase einen bezüglich der Stromstärke wesentlich höheren Stromstoß wirken zu lassen. Mit diesem Stromstoß wird die vorher gleichmäßig angewärmte Schweißfläche in die flüssige Phase überführt und der Stromstoß selbst wird durch die Einleitung des Stauchvorgangs begrenzt. Der Anlauf des Lichtbogens nach dem Zündvorgang ist jedoch auch hier von vielen Imponderabilien abhängig, so daß die Erwärmung mehrerer nacheinander zur Verschweißung anstehender Werkstücke und die Schweißung selbst ungleichmäßig sind. Abhilfe könnte hier durch Verlängerung der Schweißzeiten geschaffen werden, was jedoch im Hinblick auf die Wirtschaftlichkeit (Schweißdauer) unerwünscht ist.

Es ist auch bereits bekannt (US-PS 3 484 578), am Anfang des Schweißvorgangs bei relativ geringem Schweißstrom ein starkes Magnetfeld einwirken zu lassen, wodurch ein besseres Anlaufen des Lichtbogens gewährleistet ist.

In jedem Falle ist es jedoch so, daß der geringe Lichtbogenstrom in der Anfangsphase des Schweißvorgangs einen geringen Abhub, d. h. einen kurzen Lichtbogen oder eine hohe Leerlaufspannung bedingt. Dieser geringe Abhub hat aber den Nachteil, daß

1. die Schweißparameter genau einzustellen sind,

2. der Stromanstieg in der Endphase sehr schnell sein muß und

3. die Geschwindigkeitsregelung des Lichtbogens kompliziert ist.

Erfahrungsgemäß sollte nun der Abhub der zu verschweißenden Teile zwischen 2 und 3 mm liegen. Dabei ist dann jedoch bei geringem Schweißstrom der Lichtbogenanlauf unsicher und vor allem unregelmäßig, und dieser Mangel im Hinblick auf den Lichtbogen ist auch durch einen höhere Leerlaufspannung nicht immer zu eliminieren.

Die der vorliegenden Erfindung zugrundeliegende Aufgabe ist es mithin, den Lichtbogenanlauf so zu »steuern«, daß stets einwandfreie und jederzeit reproduzierbare Verhältnisse vorliegen.

Dies wird dadurch erreicht, daß

a) in einer dem Zündvorgang folgenden Anlaufphase gleichzeitig ein starkes Magnetfeld und ein hoher Lichtbogenschweißstrom angelegt werden,

b) in einer der Anlaufphase folgenden Hauptphase Lichtbogenschweißstrom und Magnetfeld auf einen Bruchteil der Anfangswerte reduziert werden,

c) in einer Endphase in an sich bekannter Weise der Lichtbogenschweißstrom wieder auf ein Mehrfaches des Schweißstroms der Hauptphase erhöht wird.

Weitere Ausgestaltungen der Erfindung ergeben sich aus den Unteransprüchen. Die Einzelheiten werden unter Zuhilfenahme der Zeichnungen im Folgenden erläutert.

Fig. 1 zeigt den über die Zeit aufgetragenen Schweiß(Lichtbogen-)strom.

Fig. 2 zeigt den über die Zeit aufgetragenen Strom für die Magnetspulen.

Wie den beiden Figuren zu entnehmen ist, wird entsprechend der erfindungsgemäßen Lehre unmittelbar nach dem Zündvorgang ($t = 0$) sowohl mit einem starken Magnetfeld (hoher Feldstrom $I_M$) als auch mit einem relativ hohen Lichtbogen(schweiß)strom $I_{LB}$ gearbeitet. Damit erzielt man einerseits sofort eine hohe Umlaufgeschwindigkeit des rotierenden Lichtbogens und andererseits auf Grund des hohen Schweißstroms eine hohe Energiezufuhr. Diese Kombination gewährleistet eine schnelle und gleichmäßige Erwärmung der Schweißfläche und schafft die Voraussetzung für nachfolgende gleichmäßige Lichtbogenumläufe, und zwar auch bei relativ geringen Schweißströmen.

Nachdem ein hoher Schweißstrom jedoch auch zu einem Aufschmelzen der Schweißfläche führt, was aus naheliegenden Gründen nicht innerhalb kürzester Zeit homogen über die gesamte Schweißfläche erfolgt, muß in einer zweiten Phase (Hauptphase) eine Vergleichsmäßigung der Schweißflächentemperatur angestrebt werden. Dies wird dadurch erreicht, daß mit einem Lichtbogen, dessen Schweißstromstärke etwa der Hälfte bis einem Drittel des Anfangs-Schweißstroms entspricht, gearbeitet wird. Der Lichtbogen wird mittels eines ebenfalls verringerten Magnetfeldes, und zwar auf Grund einer dem zu verschweißenden Querschnitt spezifisch angepaßte Regelung (Steuerung) des Magnetfeldes mehrmals über den gesamten Querschnitt geführt, so daß dieser gleichmäßig erwärmt wird. Die Außenkanten der Schweißfläche bleiben fest; an der Innenkante entsteht jedoch auf Grund intensiverer Wärmeeinbringung (der Lichtbogen läuft erst an der Innenkante) bereits die flüssige Phase, die jedoch durch den Lichtbogen und die festen Außenkanten innen gehalten wird.

Ist die gleichmäßige Erwärmung erreicht, so wird in einer Endphase die Stromstärke des Lichtbogenstroms wieder erhöht, um nunmehr auch die noch festen Außenkanten aufzuschmelzen. Zum Zeitpunkt $t_E$ wird sodann der Stauchvorgang für die zu verschweißenden Werkstücke eingeleitet.

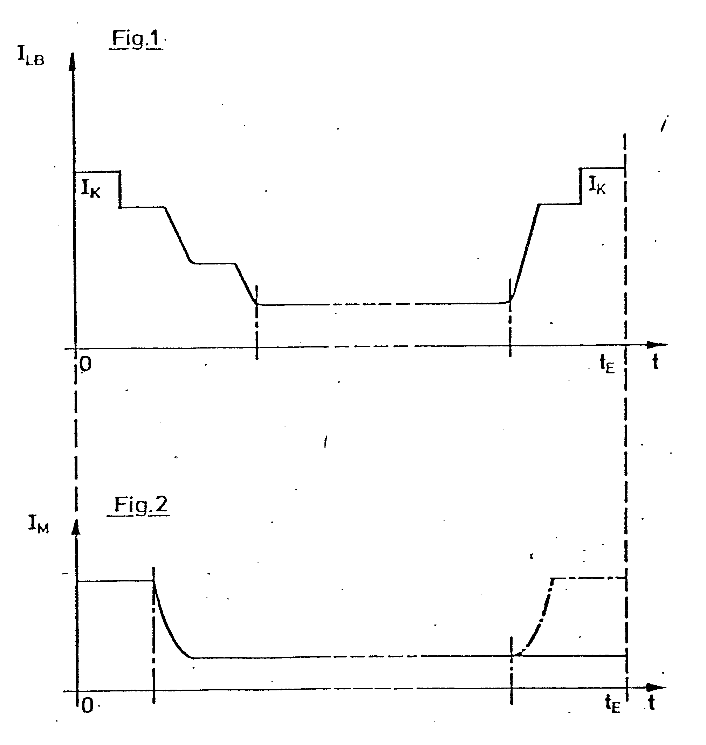

In Ausgestaltung der erfinderischen Konzeption kann in der Endphase auch das Magnetfeld erhöht werden (gestrichelt in Fig. 2). Damit erreicht man, daß der Lichtbogenlauf an die Außenkanten gedrückt wird. Der Flüssigkeitsgrad und damit das Zusammenlaufen der äußeren Nahtwulst ist somit einstellbar.

Der Vollständigkeit halber sei noch darauf hingewiesen, daß die Übergänge zwischen den einzelnen Strömen und Magnetfeldern abgestuft oder stufenlos durchgeführt werden können, wobei zusätzlich auch hinsichtlich der Änderungsgeschwindigkeit variiert werden kann.

Zusammenfassend soll explizit nochmals darauf hingewiesen werden, daß mit dem erfindungsgemäßen Stromprogramm, dessen wesentlicher Bestandteil die Kombination hoher Schweißstrom / starkes Magnetfeld in der Anlaufphase ist, beim Schweißen von Werkstücken mit größeren Wandstärken ($> 3$ mm) hervorragende Ergebnisse erzielt wurden.

**Patentansprüche**

1. Verfahren für das Schweißen mit magnetisch bewegtem Lichtbogen, insbesondere zur Anwendung beim Verschweißen stärkerer Wanddicken, dadurch gekennzeichnet, daß

a) in einer dem Zündvorgang folgenden Anlaufphase gleichzeitig ein starkes Magnetfeld und ein hoher Lichtbogenschweißstrom angelegt werden,

b) in einer der Anlaufphase folgenden Hauptphase Lichtbogenschweißstrom und Magnetfeld auf einen Bruchteil der Anfangswerte reduziert werden,

c) in einer Endphase in an sich bekannter Weise der Lichtbogenschweißstrom wieder auf ein Mehrfaches des Schweißstroms der Hauptphase erhöht wird.

2. Verfahren nach Anspruch 1, dadurch gekennzeichnet, daß in der Endphase auch das Magnetfeld wieder erhöht wird.

3. Verfahren nach Anspruch 1 oder 2, dadurch gekennzeichnet, daß der Lichtbogenschweißstrom der Anlaufphase das etwa zwei- bis dreifache dessen der Hauptphase beträgt.

4. Verfahren nach einem der Ansprüche 1 bis 3, dadurch gekennzeichnet, daß die Übergänge zwischen den Stromstärken abgestuft verlaufen.

## Claims

1. A method of welding with a magnetically moved electric arc, in particular for use in welding rather large wall thicknesses, characterized in that:

a) in a starting phase following the ignition process a strong magnetic field and a high electric arc welding current are simultaneously applied;
b) in a main phase following the starting phase the electric arc welding current and magnetic filed are reduced to a fraction of the initial value; and
c) in a final phase the electric arc welding current is again increased in a manner known per se to a multiple of the welding current of the main phase.

2. A method, according to Claim 1, characterized in that the magnetic field is also increased again in the final phase.

3. A method, according to Claim 1 or 2, characterized in that the electric arc welding current of the starting phase is double or triple that of the main phase.

4. A method, according to any one of Claims 1 to 3, characterized in that the transitions between the current intensities proceed in a graded manner.

## Revendications

1. Méthode de courant pour le soudage à l'arc électrique propulsé magnétiquement, notamment pour souder de fortes épaisseurs de paroi, caractérisé en ce que:

a) au cours de la phase de démarrage faisant suite à l'opération d'allumage, on applique simultanément un champ magnétique intense et un courant d'arc élevés,
b) au cours de la phase principale qui fait suite à la phase de démarrage, on réduit le courant de soudage de l'arc électrique et le champ magnétique à une fraction des valeurs initiales,
c) au cours de la phase finale, on augmente de nouveau de façon connue le courant de l'arc à un multiple du courant de soudage pendant la phase principale.

2. Méthode de courant selon la revendication 1, caractérisé en ce que dans la phase finale, on augmente également de nouveau le champ magnétique.

3. Méthode de courant selon l'une quelconque des revendications 1 et 2, caractérisé en ce que dans la phase initiale, le courant de l'arc correspond au double jusqu'au triple du courant de la phase principale.

4. Méthode de courant selon l'une quelconque des revendications 1 à 3, caractérisé en ce que les transitions entre les intensités de courant se font de façon échelonnée.

Fig.1

Fig.2